# EUROPÄISCHE PATENTSCHRIFT

(11) **EP 1 638 817 B1**
(45) Veröffentlichungstag und Bekanntmachung des Hinweises auf die Patenterteilung: **19.12.2007**
(21) Anmeldenummer: 04723154.3
(22) Anmeldetag: 25.03.2004
(51) Int. Cl.: B60R 21/01

(54) **SICHERHEITSVORRICHTUNG FÜR EIN KRAFTFAHRZEUG UND VERFAHREN ZUR MITTEILUNG DES ZUSTANDS EINER SICHERHEITSVORRICHTUNG EINES KRAFTFAHRZEUGS**
SAFETY DEVICE FOR A MOTOR VEHICLE, AND METHOD FOR COMMUNICATING THE STATUS OF A SAFETY DEVICE OF A MOTOR VEHICLE
DISPOSITIF DE SECURITE POUR UN VEHICULE A MOTEUR ET PROCEDE DE NOTIFICATION DE L'ETAT D'UN DISPOSITIF DE SECURITE D'UN VEHICULE A MOTEUR

(30) Priorität: 28.05.2003 DE 10324215
(43) Veröffentlichungstag der Anmeldung: 29.03.2006
(73) Patentinhaber: ROBERT BOSCH GMBH, 70442 Stuttgart (DE)
(72) Erfinder: MATTES, Bernhard, 74343 Sachsenheim (DE); STUMPP, Hans-Peter, 71706 Markgroeningen (DE); NITSCHKE, Werner, 71254 Ditzingen (DE); SCHUMACHER, Hartmut, 71691 Freiberg (DE); WOTTRENG, Walter, 370-2 Gumna-Ken (JP); GUETTLER, Hans, 74199 Untergruppenbach (DE); MORITZ, Rainer, 70794 Filderstadt (DE); HERRMANN, Thomas, 74613 Oehringen (DE); STUETZLER, Frank-Juergen, Farmington Hills, MI 48331 (US); BALZER, Knut, 71717 Beilstein (DE); LICH, Thomas, 71409 Schwaikheim (DE); GROEGER, Ulrike, 70499 Stuttgart (DE); KUTTENBERGER, Alfred, 71696 Moeglingen (DE); GROESCH, Lothar, Farmington Hills, MI 48331 (US); SCHMID, Michael, 70806 Kornwestheim (DE); KROENINGER, Mario, 77815 Buehl (DE)
(86) Internationale Anmeldenummer: PCT/DE2004/000613
(87) Internationale Veröffentlichungsnummer: WO 2004/110823

(56) Entgegenhaltungen:
- EP-A- 0 957 013
- WO-A-03/053749
- DE-A- 10 153 052
- US-A- 6 116 638
- US-B1- 6 605 877

## Beschreibung

### STAND DER TECHNIK

Die vorliegende Erfindung betrifft eine Sicherheitsvorrichtung für ein Kraftfahrzeug und Verfahren zur Mitteilung des Zustands einer Sicherheitsvorrichtung eines Kraftfahrzeugs.

Mit der Einführung des Airbags in Kraftfahrzeugen im Jahr 1980 durch Mercedes Benz ist eine weitreichende Entwicklung im Bereich der Rückhaltesysteme in Gang gesetzt worden. Ergebnisse dieser Entwicklung sind neben dem Beifahrer-Airbag auch Seiten-Airbags, Kopf-Airbags, Knie-Bags, Gurtstraffer und Überroll-Schutzreinrichtungen. Mit Hilfe einer Zusatzsensorik, wie einer Innenraum- bzw. Insassen-Detektionssensorik, Pre-Crash- oder Roll-over-Erkennung, ergibt sich folglich eine erhebliche Verbesserung des Insassenschutzes in diversen Unfallsituationen. Im Zuge der fortschreitenden Entwicklung auf dem Gebiet des Insassenschutzes erhöht sich stetig die Anzahl der Schutzeinrichtungen. Im Gegensatz dazu existiert für die Insassenschutzsysteme derzeit lediglich eine einfache Anzeige, welche die Betriebsbereitschaft des zentralen Airbag-Steuergeräts und gegebenenfalls peripherer Sensoren anzeigt.

Bei einer solchen bekannten Anzeige, welche meist in Form einer LED oder Glühlampe ausgeführt ist, prüft typischerweise das Zentralgerät seine Betriebsbereitschaft nach dem Einschalten der Zündung, d.h. beim Power-on. In dieser Zeit leuchtet die Anzeige eine vorbestimmte Zeitperiode und erlischt, wenn kein Fehler im System festgestellt wurde. Ein weitergehender Ansatz zur Visualisierung der Funktionsfähigkeit des Insassenschutzsystems ist in einer neuen amerikanischen Gesetzesvorlage FMVSS 208 näher erläutert. Gemäß dieser Vorlage muss eine Anzeige aktiviert werden, sobald der Beifahrer-Airbag ausgeschaltet ist, so dass der Fahrer und Beifahrer visuell in Kenntnis gesetzt wird, dass die entsprechende Schutzeinrichtung, z.B. der Beifahrer-Airbag, deaktiviert ist.

Von Nachteil bei den vorgenannten Anzeigen ist die undifferenzierte Information zur Betriebsbereitschaft, d.h. betriebsbereit; nicht betriebsbereit, sowie die begrenzte Berücksichtigung der Vielzahl von im Fahrzeug vorhandenen Schutzeinrichtungen.

Aus US 6,116,638 ist es bekannt, Warnkontrolllampen anzusteuern, wenn beispielsweise beim Betätigen des Zündschlüssels beim Hochfahren der Elektronik ein Fehler erkannt wird.

Aus EP 095 013 A2 ist es bekannt, bei einer Abnormalität Lampen anzusteuern, in Abhängigkeit davon, welche Komponente für den Front- oder Seitenaufprall fehlerhaft ist.

Aus DE 101 53 052 A1 sind Rückhaltesystemstatusindikatoren bekannt, die bei einem Systemfehler im Insassenschutzsystem angesteuert werden.

Aus DE 101 12 194 A1 ist eine Sicherheitsvorrichtung und ein Verfahren zur Mitteilung deren Zustand gemäß den Oberbegriffen der Ansprüchen 1 und 11.

### VORTEILE DER ERFINDUNG

Die erfindungsgemäße Sicherheitsvorrichtung für ein Kraftfahrzeug mit den Merkmalen des Anspruchs 1 und das Verfahren zur Mitteilung des Zustands der Sicherheitsvorrichtung eines Kraftfahrzeug mit den Merkmalen des Anspruchs 11 weist gegenüber den bekannten Lösungsansätzen den Vorteil auf, dass eine umfassendere Zustandsinformation über die im Fahrzeug vorhandenen Sicherheitseinrichtungen sowie Sensorsysteme und gegebenenfalls über eine individuelle u.a. daraus resultierender Schutzlevel der Insassen bereitgestellt wird. Diese Zustandsinformation wird vor, insbesondere auch während und/oder nach der Fahrt bereitgestellt, sowie nach einem möglichen Unfall, in den das Fahrzeug verwickelt wurde.

Zum einen wird auf diese Weise einem Insassen die Vielzahl der vorhandenen Sicherheitseinrichtungen bewusst gemacht. Zum anderen wird er darüber in Kenntnis gesetzt, welche Schutzsysteme aktiviert bzw. deaktiviert oder im einzelnen betriebsbereit bzw. nicht funktionsfähig sind.

Mit anderen Worten wird eine Sicherheitsvorrichtung für ein Kraftfahrzeug bereitgestellt mit: einer Vielzahl von Insassenschutzmitteln und diesen zugeordneten Sensoren; einer Verarbeitungseinrichtung, die prüft, ob die Insassenschutzmittel und/oder zugehörigen Sensoren in Betrieb und/oder ordnungsgemäß funktionsfähig sind und daraus Zustandsinformationen ermittelt; und eine Ausgabeeinrichtung, die unter Berücksichtigung sämtlicher Zustandsinformationen mitteilt, welchen Betriebszustand jedes einzelne Insassenschutzmittel und/oder Sensor aufweist.

In den Unteransprüchen finden sich vorteilhafte Weiterbildungen und Ausgestaltungen der im Anspruch 1 angegebenen Sicherheitsvorrichtung und des Verfahrens gemäß Anspruch 11.

Gemäß einer bevorzugten Weiterbildung sind Sensoren vorgesehen, welche die Sitzposition zumindest des Fahrers und/oder Beifahrers erfassen und die Verarbeitungseinrichtung diese erfassten Signale bei der Ermittlung der Zustandsinformationen berücksichtigt. Somit kann die Sitzposition eines Insassen vorteilhaft in die Insassenschutzbewertung mit einfließen.

Gemäß einer weiteren bevorzugten Weiterbildung weist die Verarbeitungseinrichtung eine Berechnungseinrichtung auf, die aus den Zustandsinformationen einen individuellen Insassenschutzlevel zumindest für den Fahrer und/oder Beifahrer berechnet und über die Ausgabeeinrichtung ausgibt. Dies birgt den Vorteil einer einfach verständlichen Informationswiedergabe über die eigene Schutzqualität abhängig von verschiedensten Kriterien wie der Sitzposition, Airbagverfügbarkeit...

Gemäß einer weiteren bevorzugten Weiterbildung weist die Ausgabeeinrichtung ein Fahrer-Display und/oder ein separates Beifahrer-Display und/oder ein Zentral-Display mit separaten Anzeigen für Fahrer und Beifahrer und/oder eine Scheibenprojektionseinrichtung jeweils für optische Mitteilungen; und/oder eine Sprachausgabeeinrichtung und/oder eine Warntoneinrichtung jeweils für akustische Mitteilungen; und/oder einen elektrisch verstellbaren Sitz und/oder einen reversiblen Gurtstraffer jeweils für haptische Mitteilungen auf. Auf diese Weise können vorbestimmte visuelle Signale bzw. akustische Mitteilungen auch in Form von einer Sprachausgabe oder haptische Mitteilungen, beispielsweise durch Anziehen eines Gurtstraffers, an den/die Insassen des Fahrzeugs ergehen. Auch können auf diese Weise Mitteilungen über den Insassenschutzlevel an die Insassen überbracht werden.

Gemäß einer weiteren bevorzugten Weiterbildung weist die zentrale Datenübermittlungseinrichtung einen CAN-Bus auf. Dies birgt den Vorteil, dass alle über einen CAN-Bus im Fahrzeug übertragenen Daten, wie beispielsweise ABS oder ESP relevante Daten, der Mitteilungsvorrichtung zugeführt werden, um eine auf umfassenden Daten basierende Information über die Insassenschutzqualität generieren und mitteilen zu können.

Gemäß einer weiteren bevorzugten Weiterbildung weist das Insassenschutzsystem mindestens einen Fahrer- und Beifahrer-Airbag und eine Pre-Crash-Sensoreinrichtung und/oder eine Notfall-Sitzverstellungseinrichtung auf. Somit werden diverse Schutzeinrichtungen von der Sicherheitsvorrichtung berücksichtigt.

Gemäß einer weiteren bevorzugten Weiterbildung weist die Verarbeitungseinrichtung einen Eingang für GPS-Daten auf. Daraus resultiert der Vorteil, dass ebenfalls Positionsdaten des Fahrzeugs der Mitteilungsvorrichtung bekannt sind, z.B. für das Absetzen eines Notrufs.

Gemäß einer weiteren bevorzugten Weiterbildung weist die Steuereinrichtung einen Ausgang zur Ausgabe von Daten an die zentrale Datenübermittlungseinrichtung auf. Dies birgt den Vorteil, dass beispielsweise dem CAN-Bus die in der Steuereinrichtung generierten Daten zugeführt werden und somit weiteren Systemen im Fahrzeug zur Verfügung stehen.

Gemäß einer weiteren bevorzugten Weiterbildung weist die Verarbeitungseinrichtung eine Steuereinrichtung mit einer Speichereinrichtung zur Speicherung der Zustandsinformationen auf. Somit kann auf vorteilhafte Weise z.B. ein Rückschluss auf eine eventuelle Unfallursache und den genauen Unfallhergang aus den entsprechenden Daten gewonnen werden.

Gemäß einer weiteren bevorzugten Weiterbildung werden in der Verarbeitungseinrichtung für die Fahrzeugsicherheit relevante Daten der Signale derart ausgewertet, dass daraus ein Insassenschutzfaktor jeweils für Fahrer und Beifahrer ermittelt wird, welcher den Insassen über die Ausgabeeinrichtung vor und/oder während der Fahrt mitgeteilt wird. Vorteilhaft daran ist die direkte Vermittlung an den Insassen, wenn er als Beifahrer beispielsweise die Beine auf das Armaturenbrett streckt, welches von der Insassen-Überwachungseinrichtung erfasst wird, dass daraus ein stark erhöhtes Verletzungsrisiko und somit eine reduzierte Insassenschutzqualität folgert.

### ZEICHNUNG

Ein Ausführungsbeispiel der Erfindung ist in der einzigen Figur der Zeichnung dargestellt und in der nachfolgenden Beschreibung näher erläutert.

Die Figur zeigt ein schematisches Diagramm einer Mitteilungsvorrichtung zur Erläuterung einer Ausführungsform der vorliegenden Erfindung.

### BESCHREIBUNG DES AUSFÜHRUNGSBEISPIELS

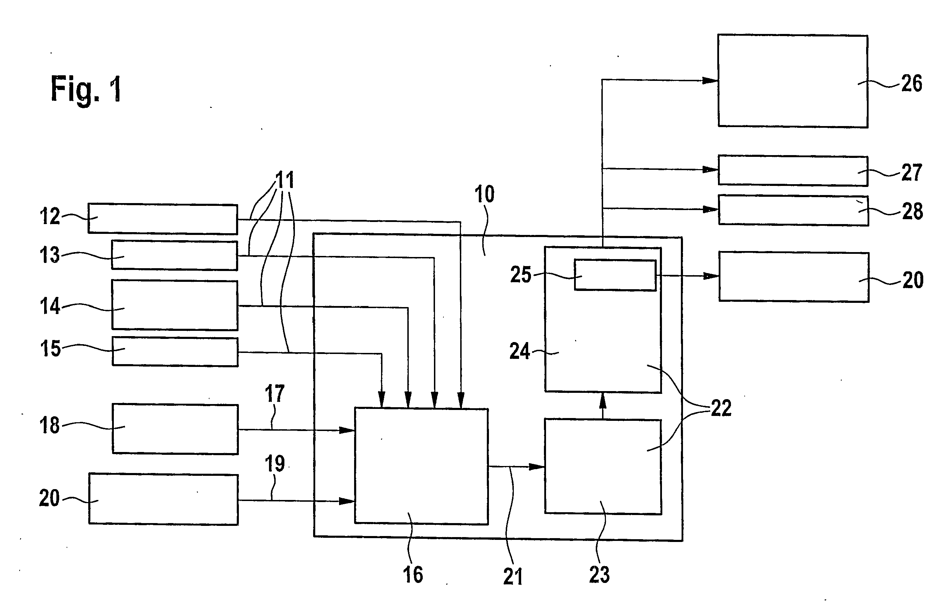

In der Figur ist eine Mitteilungsvorrichtung dargestellt, welche Insassen eines Fahrzeugs, insbesondere den Fahrer und den Beifahrer, die aktuelle Insassenschutzqualität vermittelt. Gemäß FIG. 1 empfängt eine Verarbeitungseinrichtung 10 Abtastwerte 11 bzw. Zustandssignale von einer Innenraum-Überwachungseinrichtung 12, einer Airbag-Überwachungseinrichtung 13, einer Pre-Crash-Überwachungseinrichtung 14 und einer Sitzpositions-Überwachungseinrichtung 15. Die Sitzpositions-Überwachungseinrichtung 15 gibt Auskunft über die aktuelle Sitzeinstellung des Fahrer- und/oder Beifahrersitzes, insbesondere auch der Kopfstützposition. Die Pre-Crash-Überwachungseinrichtung 14 liefert ein Signal 11 über die Funktionsfähigkeit der Einrichtung, ebenso wie die Airbag-Überwachungseinrichtung 13. Die Innenraum-Überwachungseinrichtung 12 hingegen gibt beispielsweise Auskunft über die Art und Weise, wie beispielsweise der Beifahrer auf seinem Sitz sitzt, und ob dieser insbesondere seine Beine auf dem Armaturenbrett abgestützt hat. Die von den Überwachungseinrichtungen 12, 13, 14 und 15 empfangenen Daten 11 werden in der Verarbeitungseinrichtung 10 einer Filter- und/oder Extraktionseinrichtung 16 zugeführt. Gemäß dem Ausführungsbeispiel in FIG. 1 werden dieser Filter- und/oder Extraktionseinrichtung 16 darüber hinaus über einen Eingang Positionsdaten, d.h. GPS-Daten 17, von einer GPS-Einrichtung 18 zugeführt.

Zusätzlich werden über einen Eingang Daten 19 einer zentralen Datenübermittlungseinrichtung 20, beispielsweise einem CAN-Bus, der Filter- und/oder Extraktionseinrichtung 16 zugeführt. Die Daten 19 der zentralen Datenübermittlungseinrichtung 20 weisen vorzugsweise ABS- oder auch ESP-Daten auf. Die in der Filter- und/oder Extraktionseinrichtung 16 bearbeiteten Daten 21 werden daraufhin einer Steuereinrichtung 22 übermittelt. Die Steuereinrichtung 22 weist eine Recheneinrichtung 23, auf welcher ein Algorithmus abgearbeitet werden kann, und eine Logikeinrichtung 24 zur Ansteuerung verschiedener Ausgabeeinrichtungen 20, 26, 27 und 28 auf. Über eine Schnittstelle 25 werden die in der Verarbeitungseinrichtung 10 generierten Daten auch der zentralen Datenübermittlungseinrichtung 20 zur Verfügung gestellt. Darüber hinaus ist eine haptisch aktive Ausgabeeinrichtung 26, wie beispielsweise ein Gurtstraffer oder eine elektrische Sitzpositions-/Kopfstützeneinstellung, vorgesehen. Eine akustische Mitteilung ergeht beispielsweise über eine akustische Mitteilungseinrichtung 27 in Form einer Sprachmitteilung. Bezugszeichen 28 bezeichnet eine optische Ausgabeeinrichtung, wie ein Fahrer-Display oder aber ein separates Anzeigen-Display zur Sicherheitszustands-Visualisierung.

Mit Hilfe des Algorithmus in der Recheneinrichtung 23 der Steuereinrichtung 22 lässt sich z.B. die aktuelle Sicherheitsstufe des Fahrers beispielhaft wie folgt berechnen. Hat der Fahrer eine normale Sitzposition eingenommen, sitzt die Kopfstütze in der richtigen Lage, sind alle Sicherheitssysteme funktionsfähig, und auch der Fahrzeugzustand, d.h. beispielsweise Beladungszustand oder Reifendruck, in Ordnung, so ergibt sich eine hohe Insassenschutzqualität. Dies ist beispielsweise durch eine Balkenanzeige mit geringem Ausschlag visualisierbar. Die Sicherheitsstufe des Beifahrers hingegen kann aufgrund der detektierten Sitzposition mit den Beinen auf dem Armaturenbrett abgestützt bei sonst gleichen Kriterien einen hohen Ausschlag der entsprechenden Balkenanzeige ergeben, da ein hohes Verletzungsrisiko im Falle eines Unfalls bestünde.

Mit anderen Worten wird eine attraktive Zustandsinformation über die Sicherheitseinrichtungen sowie Sensorsysteme vor, während und nach der Fahrt sowie nach einem möglichen Unfall mitgeteilt. Die Mitteilung umfasst hier zum einen die Darstellung in einem Fahrer-Display, als auch farbige Anzeigeinstrumente, welche im Cockpit integriert sind, und sowohl für den Fahrer als auch für den Beifahrer im Sichtbereich liegen, vorzugsweise jedoch getrennt voneinander angesteuert werden. So wird den Insassen bewusst gemacht, dass eine Vielzahl von Sicherheitseinrichtung im Fahrzeug vorhanden ist, wie z.B. Fahrer- und Beifahrer-Airbag, sowie Seiten- und Window-Bags, Gurtstraffer, usw. Der Fahrer wird in einem sogenannten "Pre-Drive-Check" darüber in Kenntnis gesetz, welche Schutzsysteme bzw. Überwachungseinrichtungen 12, 13, 14, 15 aktiviert sind. Dies erfolgt beispielsweise durch eine graphische Check-Liste in einem Anzeige-Display, oder aber auch durch eine haptische Mitteilung über die Funktionsfähigkeit, z.B. des Gurtstraffers, durch ein kurzzeitiges Anziehen des Gurtes.

Im Zuge einer Sitzpositionsüberwachung mit Hilfe einer Sitzpositions-Überwachungseinrichtung 15 und einer Fahrzeuginnenraum-Überwachungseinrichtung 12 wird ermittelt und der Fahrer bzw. Beifahrer entsprechend davon in Kenntnis gesetzt, wie seine Sitzposition optimal zu wählen ist, so dass eine bestmögliche Schutzwirkung der Rückhaltesysteme gewährleistet wird. Vorzugsweise wird dabei dem Insassen mitgeteilt, wie seine Kopfstütze zur Verbesserung der Insassenschutzqualität einzustellen ist. Dies wird entsprechend überwacht, und dem Insassen wird mittels eines Regelkreises vermittelt, wann die Voraussetzungen für eine optimale Insassenschutzfunktion erfüllt sind.

Zusätzlich erhalten die Insassen eine Mitteilung über die aktuelle Sicherheit sowohl des Fahrzeugs als auch für sich selbst während der Fahrt. Dieser "Dynamic Safety Check" bedeutet, dass bei einer entsprechend unsicheren Sitzposition, z.B. auf dem Armaturenbrett abgestützte Beine des Beifahrers, eine visuelle und/oder akustische und/oder haptische Mitteilung ergeht. Diese Mitteilung setzt den Beifahrer in Kenntnis, dass ein geringes Schutzpotential der Sicherheitseinrichtungen bei dieser Sitzposition gegeben ist. Die Mitteilung kann z.B. dadurch erfolgen, dass eine einfache Anzeige von grün bei einer normalen Sitzposition und gelb zu rot bei einer gefährlichen Sitzposition, wie der oben beschriebenen springt. Alternativ dazu kann eine gesprochene Meldung ausgegeben werden, oder aber auch ein reversibler Gurtstraffer kurzzeitig angezogen werden, um beispielsweise auf die gefährliche Sitzposition aufmerksam zu machen. Außerdem besteht ein Vorteil für die Mitteilung über den Fahrzeug-Sicherheitszustand darin, dass z.B. bei extremen Fahrsituationen (detektiert aus den ESP-Daten) oder extremen äußeren Einflüssen, wie hohem Seitenwind (ebenfalls aus ESP-Daten ablesbar) bzw. starker oder hoher Beladung, dem Fahrer eine Warnmeldung mitgeteilt werden kann. Außerdem kann die Verarbeitungseinrichtung 10 bei langen Fahrten dem Fahrer durch die vorhandenen Ausgabeeinrichtungen 26, 27, 28, 20 mitteilen, entsprechende Pausenzeiten einzuhalten, um auch aktiv vor einer Übermüdung des Fahrers zu warnen.

Im Falle eines auftretenden Unfalls kann die Mitteilungsvorrichtung den Fahrer zur Beruhigung beispielsweise auf akustischem Wege informieren, dass ein Rettungsdienst benachrichtigt wurde oder Rettungsmaßnahmen eingeleitet worden sind, wenn ein Notfallsignal vom Fahrzeug abgesetzt wurde. Zusätzlich können die gesamten Daten der Verarbeitungseinrichtung 10 in einer Speichereinrichtung (nicht dargestellt) abgespeichert werden, so dass insbesondere auch im Nachhinein die aktuellen Sicherheitszustände/Sitzpositionen nachvollzogen werden können. Dies kann zu einem Detail bei einer unter Umständen erforderlichen Unfallrekonstruktion beitragen.

Gemäß der vorliegenden Erfindung erfasst die Verarbeitungseinrichtung 10, beispielsweise ein Steuergerät, auch Daten 19 von einer zentralen Datenübermittlungseinrichtung 20, z.B. einem CAN-Bus.

In der Verarbeitungseinrichtung 10 werden die relevanten Größen extrahiert bzw. gefiltert und mit einem Algorithmus bearbeitet. In Abhängigkeit der Ergebnisse der Verarbeitungseinrichtung 10, d.h. je nach Situation/Phase, werden dann die unterschiedlichen Ausgabemedien 26, 27, 28, 20 angesprochen. Vorzugsweise seien hier ein bereits im Fahrzeug vorhandenes Display, wie beispielsweise ein Cockpit-Display, und reversible Gurtstraffer genannt.

Des weiteren sieht die vorliegende Erfindung ein Anzeigen-Display vor, welches dem jeweiligen Insassen seinen aktuellen individuellen Sicherheitsstatus anzeigt. Dieser setzt sich neben der Sitzeinstellung und der Sitzposition-/-lage des Insassen auf dem Sitz auch aus anderen fahrdynamischen Größen, wie beispielsweise der Geschwindigkeit, Seitenwind, Schwimmwinkel, Sicht, usw. sowie aus fahrzeugspezifischen Größen, wie z.B. dem Reifendruck oder der Beladung, usw. zusammen. Alle diesbezüglichen Daten werden in der Verarbeitungseinrichtung 10 zusammengefasst, gefiltert, gegebenenfalls extrahiert und mit einem zentralen Algorithmus verarbeitet. Dieser steuert dann die jeweilige Mitteilungseinrichtung 26, 27, 28, 20 an.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

So sind nicht alle möglichen beschriebenen Mitteilungs- bzw. Ausgabeeinrichtungen notwendig. Auch eine rein optische, rein akustische oder rein haptische Mitteilung ist vorstellbar. Darüber hinaus sind auch andere Überwachungseinrichtungen zur Lieferung von Abtastwerten als die angesprochenen angedacht. Zusätzlich teilt die Ausgabeeinrichtung einem Insassen nach einem Unfall vorzugsweise mit, dass ein Rettungsdienst und/oder die Polizei benachrichtigt ist, wenn vom Fahrzeug ein Notruf gesendet wurde. Die Insassen werden auf diese Weise nach einem Unfall zunächst einmal beruhigt und können auch in einem Zustand, in welchem sie selbst nicht mehr in der Lage sind, zu agieren, auf baldige Rettung hoffen.

Für einen "Pre-Drive Check" bietet sich eine graphische Check-Liste für Sicherheitskomponenten in einem Display; ein Bestätigen des Angurtens durch kurzes Anziehen des Gurtstraffers; Hinweise zur Optimierung der Sitzeinstellung bzw. des Lenkrades; vorzugsweise eine gesprochene Mitteilung "Insassenschutzsystem aktiviert" und/oder eine Darstellung des statischen Sicherheitsniveaus (Sitzeinstellung, Kopfstützen, Position, Gurt lose, usw.) an.

Ein "Dynamic Safety Check" fußt auf der Darstellung des dynamischen Gefahrenzustands, z.B. durch die Farbgebung der Innenraumbeleuchtung; bietet die Möglichkeit eines Warnhinweises, wenn z.B. die Füße auf dem Armaturenbrett abgelegt werden; ein Hinweis auf Airbag-Abschaltung, wenn die Situation erkannt wird; ein Warnhinweis, wenn der Beifahrer-Sitz belegt, jedoch der Beifahrer-Airbag deaktiviert ist; ein Warnhinweis auf Seitenwind, wenn bei Geradeausfahrt mit hoher Geschwindigkeit der von einer ESP-Einrichtung detektierte "Schwimmwinkel" zunimmt; ein Hinweis auf erhöhte Roll-over-Gefahr bei hohem Fahrzeugschwerpunkt durch eine hohe Dachlast/Zuladung; und einen Hinweis auf empfohlene Pausenzeiten, vorzugsweise bei von der Insassenpositionsüberwachung erkennbarer Ermüdung.

## Patentansprüche

1. Sicherheitsvorrichtung für ein Kraftfahrzeug mit:
einer Vielzahl von Insassenschutzmitteln und diesen zugeordneten Sensoren; einer Verarbeitungseinrichtung (10; 16, 22, 23, 24), die prüft, ob die Insassenschutzmittel und/oder zugehörigen Sensoren in Betrieb und/oder ordnungsgemäß funktionsfähig sind, und die daraus Zustandsinformationen (21) ermittelt; wobei eine Ausgabeeinrichtung (26, 27, 28, 20) vorgesehen ist, die unter Berücksichtigung sämtlicher Zustandsinformationen (21) mitteilt, welchen Betriebszustand jedes einzelne Insassenschutzmittel und/oder Sensor aufweist, **dadurch gekennzeichnet, dass** für jeden einzelnen Insassen ein für diesen spezifizierter Insassenschutzlevel ermittelt und ausgegeben wird.

2. Vorrichtung nach Anspruch 1, **dadurch gekennzeichnet, dass** mindestens ein weiterer Sensor vorgesehen ist, welcher die Sitzposition zumindest eines Insassen, vorzugsweise die des Fahrers und/oder die des Beifahrers, erfasst und die Verarbeitungseinrichtung (10; 16, 22, 23, 24) diese erfassten Signale bei der Ermittlung der Zustandsinformationen (21) berücksichtigt.

3. Vorrichtung nach Anspruch 1 oder 2, **dadurch gekennzeichnet, dass** die Verarbeitungseinrichtung (10; 16, 22, 23, 24) eine Berechnungseinrichtung (22, 23) aufweist, die aus den Zustandsinformationen (21) einen individuellen Insassenschutzlevel zumindest für den Fahrer und/oder Beifahrer berechnet und über die Ausgabeeinrichtung (26, 27, 28, 20) ausgibt.

4. Vorrichtung nach einem der vorangehenden Ansprüche, **dadurch gekennzeichnet, dass** die Ausgabeeinrichtung (26, 27, 28, 20) ein Fahrer-Display und/oder ein separates Beifahrer-Display und/oder ein zentrales Display mit separaten Anzeigen für Fahrer und Beifahrer und/oder eine Scheibenprojektionseinrichtung jeweils für optische Mitteilungen und/oder eine Sprachausgabeeinrichtung und/oder eine Warntoneinrichtung jeweils für akustische Mitteilungen und/oder einen elektrisch verstellbaren Sitz und/oder einen reversiblen Gurtstraffer jeweils für haptische Mitteilungen aufweist.

5. Vorrichtung nach einem der vorangehenden Ansprüche, **dadurch gekennzeichnet, dass** die Verarbeitungseinrichtung (10; 16, 22, 23, 24) an eine zentrale Datenübermittlungseinrichtung (20), insbesondere einen CAN-Bus, angeschlossen ist, die weitere aktuelle Fahrzeugdaten für die Verarbeitungseinrichtung (10; 16) zur Einbeziehung bereitstellt.

6. Vorrichtung nach einem der vorangehenden Ansprüche, **dadurch gekennzeichnet, dass** die über eine zentrale Datenübermittlungseinrichtung (20) in eine Filter- und/oder Extraktionseinrichtung (16) der Verarbeitungseinrichtung (10; 16, 22, 23, 24) eingekoppelten Daten (19) Daten aus einem ABS- und/oder ESP-System aufweisen.

7. Vorrichtung nach einem der vorangehenden Ansprüche, **dadurch gekennzeichnet, dass** die Überwachungseinrichtungen (12, 13, 14, 15) eine Einrichtung (13) zur Überwachung mindestens eines Fahrer- und Beifahrer-Airbags und/oder eine Pre-Crash-Sensoreinrichtung (14) und/oder eine Notfall-Sitzverstellungseinrichtung (15) aufweist.

8. Vorrichtung nach einem der vorangehenden Ansprüche, **dadurch gekennzeichnet, dass** eine Filter- und/oder Extraktionseinrichtung (16) der Verarbeitungseinrichtung (10; 16, 22, 23, 24), welche Signale (11) der Überwachungseinrichtungen (12, 13, 14, 15) filtert, mit einer GPS-Einrichtung (18) verbunden ist, welche Positionsdaten des Fahrzeugs zur Einbeziehung liefert.

9. Vorrichtung nach einem der vorangehenden Ansprüche, **dadurch gekennzeichnet, dass** die Steuereinrichtung (22) einen Ausgang zur Ausgabe von Daten (19) an die zentrale Datenübermittlungseinrichtung (20) aufweist.

10. Vorrichtung nach einem der vorangehenden Ansprüche, **dadurch gekennzeichnet, dass** die Verarbeitungseinrichtung (10) eine Speichereinrichtung zur nicht flüchtigen Speicherung verarbeiteter Daten und/oder Zustandsinformationen aufweist.

11. Verfahren zur Mitteilung des Zustands einer Sicherheitsvorrichtung eines Kraftfahrzeugs mit den Schritten:
Prüfen, ob eine Vielzahl von Insassenschutzmittel und/oder zugehörige Sensoren in Betrieb und/oder ordnungsgemäß funktionsfähig sind; Ermitteln von Zustandsinformationen (21) daraus; ein Ausgeben, welchen Betriebszustand jedes einzelne Insassenschutzmittel und/oder Sensor aufweist, unter Berücksichtigung sämtlicher Zustandsinformationen (21), **dadurch gekennzeichnet, dass** für jeden einzelnen Insassen ein für diesen spezifizierter Insassenschutzlevel ermittelt und ausgegeben wird.

12. VerfahrennachAnspruch 11, **dadurch gekennzeichnet, dass** in der Verarbeitungseinrichtung (10; 16, 22, 23, 24) Zustandsinformationen (21) ausgewertet werden, dass daraus ein Insassenschutzlevel zumindest für einen Insassen ermittelt wird, welcher dem/den Insassen vor und/oder während der Fahrt mitgeteilt wird.

## Claims

1. Safety device for a motor vehicle having:
a multiplicity of vehicle occupant protection means, and sensors assigned thereto; a processing device (10; 16, 22, 23, 24) which checks whether the vehicle occupant protection means and/or associated sensors are operating and/or satisfactorily operationally capable and which determines status information (21) therefrom; wherein an output device (26, 27, 28, 20) is provided which, by taking into account all the status information (21) communicates the operating status of each individual vehicle protection means and/or sensor, **characterized in that** for each individual vehicle occupant a vehicle occupant protection level which is specific to said vehicle occupant is determined and output.

2. Device according to Claim 1, **characterized in that** at least one further sensor is provided which senses the position of at least one vehicle occupant, preferably that of the driver and/or that of the front seat passenger, and the processing device (10; 16, 22, 23, 24) takes into account these acquired signals in the determination of status information (21).

3. Device according to Claim 1 or 2, **characterized in that** the processing device (10; 16, 22, 23, 24) has a calculation device (22, 23) which calculates an individual vehicle occupant protection level at least for the driver and/or front seat passenger on the basis of the status information (21) and outputs said vehicle occupant protection level via the output device (26, 27, 28, 20).

4. Device according to one of the preceding claims, **characterized in that** the output device (26, 27, 28, 20) has a driver display and/or a separate front seat passenger display and/or a central display with separate displays for the driver and front seat passenger and/or a windscreen projection device for optical messages and/or a voice output device and/or a warning tone device for acoustic messages and/or an electrically adjustable seat and/or a reversible seat belt pretensioner for haptic messages, respectively.

5. Device according to one of the preceding claims, **characterized in that** the processing device (10; 16, 22, 23, 24) is connected to a central data transmission device (20), in particular a CAN bus which makes available further current vehicle data for the processing device (10; 16) for inclusion.

6. Device according to one of the preceding claims, **characterized in that** the data (19) which is input via a central data transmission device (20) into a filter and/or extraction device (16) of the processing device (10; 16, 22, 23, 24) have data from an ABS system and/or ESP system.

7. Device according to one of the preceding claims, **characterized in that** the monitoring devices (12, 13, 14, 15) have a device (13) for monitoring at least one driver's airbag and front seat passenger's airbag and/or a pre-crash sensor device (14) and/or an emergency seat adjustment device (15).

8. Device according to one of the preceding claims, **characterized in that** a filter and/or extraction device (16) of the processing device (10; 16, 22, 23, 24) which filters signals (11) of the monitoring devices (12, 13, 14, 15) is connected to a GPS device (18) which supplies the position data of the vehicle for inclusion.

9. Device according to one of the preceding claims, **characterized in that** the control device (22) has an output for outputting data (19) to the central data transmission device (20).

10. Device according to one of the preceding claims, **characterized in that** the processing device (10) has a memory device for the non-volatile storage of processed data and/or status information.

11. Method for communicating the status of a safety device of a vehicle comprising the steps:
checking whether a multiplicity of vehicle occupant protection means and/or associated sensors are operating and/or are satisfactorily operationally capable; determination of status information (21) therefrom; outputting the operating status of each individual vehicle occupant protection means and/or sensor taking into account all the status information (21), **characterized in that** for each individual vehicle occupant a vehicle occupant protection level which is specified for said vehicle occupant is determined and output.

12. Method according to Claim 11, **characterized in that** status information (21) is evaluated in the processing device (10; 16, 22, 23, 24), **in that** from said status information (21) a vehicle occupant protection level is determined for at least one vehicle occupant and is communicated to the vehicle occupant/occupants before and/or during the journey.

## Revendications

1. Dispositif de sécurité pour un véhicule automobile comportant :
un grand nombre de moyens de protection des passagers et des capteurs associés, une installation de traitement 10 ; 16, 22, 23, 24, qui vérifie si les moyens de protection des passagers et/ou les capteurs correspondants sont en fonctionnement et/ou peuvent fonctionner correctement et on détermine à partir de là des informations d'état 21,
une installation d'émission 26, 27, 28, 20 qui, en tenant compte de toutes les informations d'état 21 indique l'état de fonctionnement de chacun des moyens de protection des passagers et/ou des capteurs,
**caractérisé en ce que**
l'on détermine et on émet pour chaque passager pris individuellement, un niveau de protection spécifique de passager.

2. Dispositif selon la revendication 1,
**caractérisé par**
au moins un autre capteur qui saisit la position assise d'au moins un occupant de préférence celle du conducteur et/ou du passager avant et l'installation de traitement 10 ; 16, 22, 23, 24 tient compte des signaux saisis lors de la détermination de l'information complémentaire 21.

3. Dispositif selon la revendication 1 ou 2,
**caractérisé en ce que**
l'installation de traitement 10 ; 16, 22, 23, 24 comporte une installation de calcul 22, 23 qui émet à partir des informations d'état 21, un niveau de protection individuel des passagers, au moins pour le conducteur et/ou le passager avant, par une installation d'émission 26, 27, 28, 20.

4. Dispositif selon l'une des revendications précédentes,
**caractérisé en ce que**
l'installation d'émission 26, 27, 28, 29 comporte un écran pour le conducteur et/ou un écran pour le passager avant et/ou un écran d'affichage central avec des afficheurs séparés pour le conducteur et le passager et/ou une installation de projection de disque chaque fois pour des messages optiques et/ou une installation d'émission vocale et/ ou une installation d'avertissement ayant chaque fois pour les communications acoustiques et/ou un siège réglable électriquement et/ou un tendeur de courroie réversible, chaque fois pour une communication haptique.

5. Dispositif selon l'une des revendications précédentes,
**caractérisé en ce que**
l'installation de traitement 10 ; 16, 22, 23, 24 est reliée à une installation de transmission de données 20, centrale notamment à un bus CAN qui intègre d'autres données de véhicule pour l'installation de traitement 10 ; 16.

6. Dispositif selon l'une des revendications précédentes,
**caractérisé en ce que**
les données 19 injectées par l'installation de transmission de données, centrale 20 dans une installation de filtre et/ou d'extraction 16 de l'installation de traitement 10 ; 16, 22, 23, 24, ont des données d'un système ABS et/ou ESP.

7. Dispositif selon l'une des revendications précédentes,
**caractérisé en ce que**
les installations de surveillance 12, 13, 14, 15 comportent une installation 13 pour surveiller au moins un coussin gonflable du conducteur et du passager avant et/ou une installation de détection de pré-collision 14 et/ ou une installation de réglage de siège de secours.

8. Dispositif selon l'une des revendications précédentes,
**caractérisé par**
une installation de filtre et/ ou d'extraction 16 de l'installation de préparation 10 ; 16, 22, 23, 24 qui filtre les signaux 11 des installations de surveillance 12, 13, 14, 15, est reliée à une installation GPS 18 qui fournit les données de position du véhicule pour les utiliser.

9. Dispositif selon l'une des revendications précédentes,
**caractérisé en ce que**
l'installation de commande 22 comporte une sortie pour émettre des données 19 vers l'installation centrale de transmission de données 20.

10. Dispositif selon l'une des revendications précédentes,
**caractérisé en ce que**
l'installation de traitement 10 comporte une mémoire pour enregistrer de manière non volatile les données traitées et les informations d'état.

11. Procédé de notification de l'état d'un dispositif de sécurité d'un véhicule comprenant les étapes suivantes :
- vérifier si un grand nombre de moyens de protection des passagers et/ou de capteurs correspondants fonctionnent et/ou peuvent fonctionner correctement ; déduire des informations supplémentaires 21 ; indiquer l'état de fonctionnement de chaque moyen de protection des passagers et/ou des capteurs en tenant compte de toutes les informations d'état 21,
**caractérisé en ce que**
pour chaque passager, on détermine et on émet un niveau de protection spécifique des passagers.

12. Procédé selon la revendication 11,
**caractérisé en ce que**
l'installation de traitement 10 ; 16, 22, 23, 24 exploite les informations d'état 21 et détermine un niveau de protection des passagers au moins pour un passager et cette information est communiquée au(x) passager(s) avant ou pendant le trajet.
